# EUROPÄISCHE PATENTANMELDUNG

(11) **EP 0 606 526 A2**
(43) Veröffentlichungstag der Anmeldung: **20.07.1994**
(21) Anmeldenummer: 93112641.1
(22) Anmeldetag: 06.08.1993
(51) Int. Cl.: B65D 83/32, B65D 83/62

(54) **Steigrohrhalter an einem Ventil für Aerosoldosen**

(30) Priorität: 12.01.1993 DE 9300288 U
(71) Anmelder: RAPID SPRAY GmbH & Co. KG, FABRIK CHEM. ERZEUGNISSE, D-88471 Laupheim (DE)
(72) Erfinder: Sonntag, Dietmar, D-88471 Laupheim (DE)
(74) Vertreter: Stahl, Gerhard F.W.

(57) **Zusammenfassung**

Die Erfindung betrifft einen Steigrohrhalter für ein mit einem Innenbeutel versehenes Ventil in einer Aerosoldose. Der Steigrohrhalter besteht aus einem einstückig gegossenen oder gespritzten Körper aus Kunststoff, umfassend zwei koaxial angeordnete Rohre, wobei ein Steigrohr über das innere Rohr und ein Ventil in einen nach oben über das innere Rohr vorstehenden Bereich des äußeren Rohres einsetzbar ist, und wobei der aus einer Kunststoffolie oder einem Folienlaminat bestehende Innenbeutel mit einem unteren Bereich des äußeren Rohres verschweißbar ist. Das äußere Rohr (14) ist im unteren Bereich an seiner Außenseite mit zwei axial verlaufenden flügelartigen Vorsprüngen (20) versehen, die einen sich radial nach außen verjüngenden Querschnitt haben.

## Beschreibung

Die Erfindung betrifft einen Steigrohrhalter für ein mit einem Innenbeutel versehenes Ventil in einer Aerosoldose, bestehend aus einem einstückig gegossenen oder gespritzten Körper aus Kunststoff, umfassend zwei koaxial angeordnete Rohre, wobei ein Steigrohr über das innere Rohr und ein Ventil in einen nach oben über das innere Rohr vorstehenden Bereich des äußeren Rohres einsetzbar ist, und wobei der aus einer Kunststoffolie oder einem Folienlaminat bestehende Innenbeutel mit einem unteren Bereich des äußeren Rohres verschweißbar ist.

Bei einem bekannten Steigrohrhalter dieser Gattung hat das äußere Rohr einen zylindrischen Querschnitt. Zum Verschweißen des Innenbeutels mit dem äußeren Rohr des Steigrohrhalters dient eine zweiteilige Schweißzange, deren beide Backen spiegelbildlich ausgebildet sind und sich im geschlossenen Zustand eng an den Außenumfang des äußeren Rohres anschmiegen. In der Praxis haben sich beim Verschweißen des Innenbeutels mit dem Steigrohrhalter jedoch Schwierigkeiten ergeben. Es besteht die Gefahr, daß die Verschweißung in demjenigen Bereich, wo die beiden Schweißbacken aneinanderstoßen, ungenügend ist, so daß Kapillaren auftreten. Durch diese Kapillaren kann aber der Inhalt des Innenbeutels unter dem Druck des in der Aerosoldose befindlichen Treibgases entweichen und sich mit dem Treibgas vermengen.

Der Erfindung liegt die Aufgabe zugrunde, den gattungsgemäßen Steigrohrhalter dahingehend zu verbessern, daß eine gasdichte Verschweißung mit dem Innenbeutel gewährleistet ist.

Erfindungsgemäß wird diese Aufgabe dadurch gelöst, daß das äußere Rohr im unteren Bereich an seiner Außenseite mit zwei axial verlaufenden flügelartigen Vorsprüngen versehen ist, die einen sich radial nach außen verjüngenden Querschnitt haben.

Diese flügelartigen Vorsprünge haben zur Folge, daß die beiden Schweißbacken am Übergang in die Trennebene stumpfe Winkel aufweisen und sich daher besser an den Steigrohrhalter anschmiegen können als dies bei einem zylindrischen Umfang der Fall ist. Da die beiden flügelartigen Vorsprünge einen sich radial nach außen verjüngenden Querschnitt haben, werden sie im Bereich des Scheitels bis auf die Schmelztemperatur erhitzt, so daß auch im Bereich der Trennebene der beiden Schweißbacken eine gasdichte Verbindung des Innenbeutels mit dem Steigrohrhalter gewährleistet ist.

Vorzugsweise liegen die beiden flügelartigen Vorsprünge einander gegenüber, so daß die beiden Schweißbacken spiegelsymmetrisch ausgebildet sein können.

Bei einer besonders vorteilhaften Ausführungsform des erfindungsgemäßen Steigrohrhalters ist vorgesehen, daß die Seitenflächen der beiden Vorsprünge tangential in das äußere Rohr übergehen.

Ein Ausführungsbeispiel der Erfindung ist in den Zeichnungen dargestellt und wird nachfolgend näher erläutert. Es zeigt:
Fig. 1 einen Längsschnitt durch den Steigrohrhalter nach der Linie A-A in Fig. 2,
Fig. 2 eine Endansicht des Steigrohrhalters gemäß Fig. 1 von links gesehen, und
Fig. 3 eine Darstellung ähnlich wie Fig. 2, in der zwei Schweißbacken schematisch dargestellt sind.

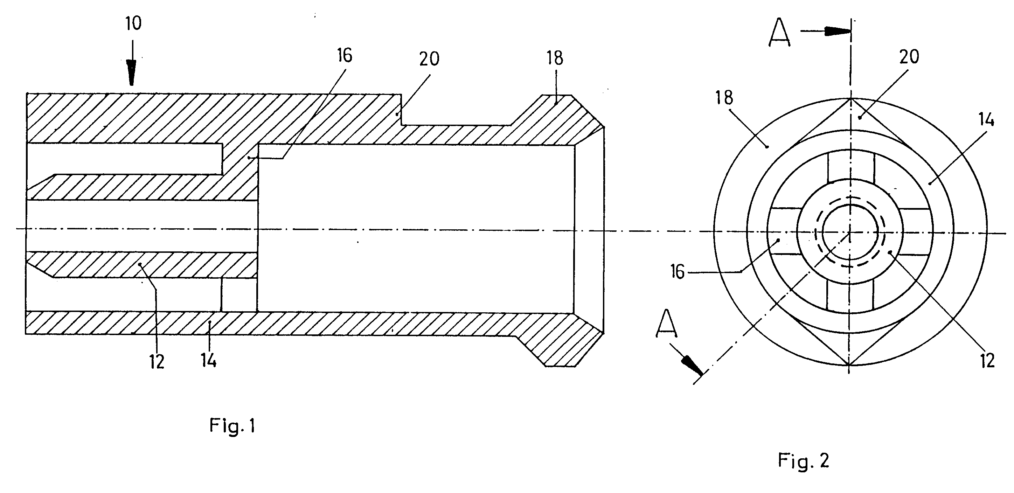

Der in Fig. 1 gezeigte und allgemein mit dem Bezugszeichen 10 bezeichnete Steigrohrhalter dient zur Verwendung bei einer mit einem Innenbeutel versehenen Aerosoldose. Derartige Aerosoldosen werden für Produkte verwendet, die nicht mit dem Treibgas in Verbindung kommen dürfen, wie z.B. ein selbstschäumendes Gel.

Der Steigrohrhalter 10 besteht aus einem einstückigen, gegossenen oder gespritzten Körper aus Kunststoff, insbesondere Polyethylen. Der Steigrohrhalter 10 umfaßt ein inneres Rohr 12 und ein zu diesem koaxial angeordnetes äußeres Rohr 14. Diese beiden Rohre 12 und 14 sind durch vier radiale Stege 16 miteinander verbunden. Wie aus Fig. 1 hervorgeht, sind die beiden Rohre 12 und 14 unterschiedlich lang, so daß das äußere Rohr 14 über das innere Rohr 12 vorsteht. Der vorstehende Bereich des äußeren Rohres 14 ist am freien Ende aus einem nachfolgend erläuterten Zweck mit einem nach außen vorspringenden Wulstrand 18 versehen. Vom gegenüberliegenden Ende des äußeren Rohres 14 erstrecken sich zwei einander diametral gegenüberliegende flügelartige Vorsprünge 20 bis über die Mitte hinaus. Wie aus Fig. 2 ersichtlich ist, gehen diese beiden flügelartigen Vorsprünge 20 tangential in den Umfang des äußeren Rohres 14 über. Die beiden Vorsprünge 20 haben daher einen sich radial nach außen verjüngenden dreieckigen Querschnitt.

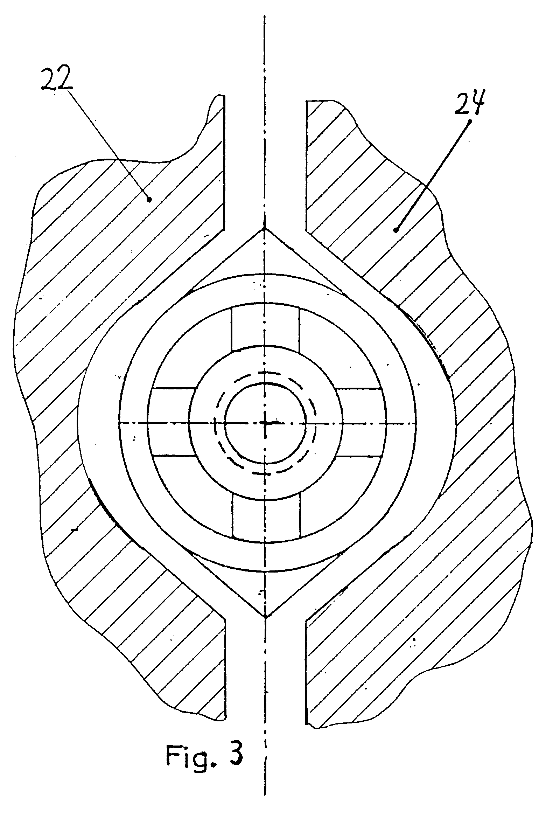

In das innere Rohr 12 kann ein Steigrohr eingesetzt werden, und in den über das innere Rohr 12 vorstehenden Bereich des äußeren Rohres 14 kann ein (nicht gezeigtes) Ventil eingesetzt werden, dessen Teller um den Wulstrand 18 des äußeren Rohres 14 umgebördelt wird. Ein (nicht gezeigter) Innenbeutel aus einer Kunststoffolie, vorzugsweise Polyethylen, oder aus einem Kunststoff-Aluminium-Kunststoff-Laminat wird mit dem äußeren Rohr 14 um Bereich der flügelartigen Vorsprünge 20 verschweißt. Hierzu dienen zwei in Fig. 3 schematisch dargestellte Schweißzangen 22, 24, die zum Umriß des äußeren Rohres 14 komplementär sind, wobei ihre Trennebene mit der Symmetrieebene der beiden Vorsprünge 20 zusammenfällt. Die beiden Schweißzangen 22, 24 sind mit einer geeigneten Heizeinrichtung versehen, um das Kunststoffmaterial des (nicht gezeigten) Innenbeutels auf Schmelztemperatur zu erhitzen. Wegen der geringen Querschnittsfläche werden dabei auch die beiden Vorsprünge 20 des äußeren Rohres 14 im Bereich des Scheitels geschmolzen, so daß eine gasdichte Verbindung des Innenbeutels mit dem Steigrohrhalter 10 gewährleistet ist.

Auch wenn dies in der Zeichnung nicht dargestellt ist, so ist dem Fachmann bekannt, daß der Steigrohrhalter 10 im Deckel einer Aerosoldose festgelegt ist, so daß sich das Steigrohr und der dieses umgebende Innenbeutel innerhalb der Dose befinden, während der Wulstrand 18 nach oben vorspringt.

## Patentansprüche

1. Steigrohrhalter für ein mit einem Innenbeutel versehenes Ventil in einer Aerosoldose, bestehend aus einem einstückig gegossenen oder gespritzten Körper aus Kunststoff, umfassend zwei koaxial angeordnete Rohre, wobei ein Steigrohr über das innere Rohr und ein Ventil in einen nach oben über das innere Rohr vorstehenden Bereich des äußeren Rohres einsetzbar ist, und wobei der aus einer Kunststoffolie oder einem Folienlaminat bestehende Innenbeutel mit einem unteren Bereich des äußeren Rohres verschweißbar ist, dadurch **gekennzeichnet**, daß das äußere Rohr (14) im unteren Bereich an seiner Außenseite mit zwei axial verlaufenden flügelartigen Vorsprüngen (20) versehen ist, die einen sich radial nach außen verjüngenden Querschnitt haben.

2. Steigrohrhalter nach Anspruch 1, dadurch **gekennzeichnet**, daß die Vorsprünge (20) einander diamtetral gegenüberliegen.

3. Steigrohrhalter nach Anspruch 1 oder 2, dadurch **gekennzeichnet**, daß die Seitenflächen der beiden Vorsprünge (20) tangential in das äußere Rohr (14) übergehen.
